# EUROPÄISCHE PATENTSCHRIFT

(11) **EP 3 807 156 B1**
(45) Veröffentlichungstag und Bekanntmachung des Hinweises auf die Patenterteilung: **22.06.2022**
(21) Anmeldenummer: 19749218.4
(22) Anmeldetag: 17.07.2019
(51) Int. Cl.: B65D 25/04, B65D 6/18, B29C 53/04, B29C 53/84

(54) **TRANSPORTVORRICHTUNG**
TRANSPORT DEVICE
DISPOSITIF DE TRANSPORT

(30) Priorität: 18.07.2018 DE 102018117396; 25.07.2018 DE 102018117944; 30.07.2018 DE 102018118373
(43) Veröffentlichungstag der Anmeldung: 21.04.2021
(73) Patentinhaber: Feurer Febra GmbH, 74336 Brackenheim (DE)
(72) Erfinder: FORTENBACHER, Klaus, 76593 Gernsbach (DE); GOLLER, Achim, 69254 Malsch (DE); FEURER, Markus, 76461 Muggensturm (DE)
(74) Vertreter: Patentanwälte Bregenzer und Reule Partnerschaftsgesellschaft mbB
(86) Internationale Anmeldenummer: PCT/EP2019/069200
(87) Internationale Veröffentlichungsnummer: WO 2020/016275

(56) Entgegenhaltungen:
- CN-A- 106 428 890
- DE-A1- 10 311 593
- DE-A1-102011 055 676

## Beschreibung

Solche der Anmelderin aus ihrer Praxis bekannten Transportvorrichtungen werden beispielsweise zum Transport von Bauteilen für die Kraftfahrzeugindustrie verwendet. Auf dem Bodenteil, das insbesondere als Palette ausgebildet sein kann, sind mehrere Gefache angeordnet, die mit den Unterkanten ihrer Umfangswände auf der Aufstellfläche der Bodenplatte aufstehen. Die Gefache können nach oben und/oder unten offen sein und weisen meist eine Aufnahmestruktur für die zu transportierenden Gegenstände auf, in die diese kratz- und stoßsicher eingelegt werden können. Die rings umlaufenden Seitenwände des Bodenteils hindern die Gefache am Verrutschen während des Transports. Zudem bilden sie zusammen mit der Bodenplatte einen nach oben offenen Behälter, in dem die Gefache nach dem Entleeren zum Rücktransport eingelegt werden können. Zu diesem Zweck sind die Gefache zur Volumenreduktion faltbar. Um mehr Gefache mit der Transportvorrichtung zu transportieren zu können, wird auf die auf der Bodenplatte aufstehenden ersten Gefache ein Zwischenboden aufgelegt, der diese an den oberen Kanten ihrer Umfangswände mittels eines nach unten abstehenden Rands umgreift, so dass er gegen Verrutschen gesichert ist. Auf eine Oberfläche des Zwischenbodens, die als weitere Aufstellfläche wirkt, können dann weitere, zweite Gefache mit den Unterkanten ihrer Umfangswände aufgestellt werden, die in der Regel identisch sind mit den ersten Gefachen. Diese Vorrichtung lässt sich noch erweitern, indem auf die zweiten Gefache ein weiterer Zwischenboden aufgelegt wird, auf den dann dritte Gefache aufgestellt werden usw. Nachteilig an den vorbekannten Transportvorrichtungen ist aber, dass der Zwischenboden aufgrund seiner Abmessungen, die im Wesentlichen der Außenkontur der Seitenwände des Bodenteils entsprechen, beim Rücktransport nach dem Entleeren nicht zwischen die Seitenwände eingelegt werden kann. Er muss daher gesondert zurücktransportiert werden, was als unpraktisch empfunden wird. Eine ähnliche Transportvorrichtung ohne Zwischenboden ist aus der CN 106428890 A bekannt.

Es ist daher Aufgabe der Erfindung, eine Transportvorrichtung der eingangs genannten Art derart weiterzubilden, dass sie besser handhabbar ist.

Diese Aufgabe wird erfindungsgemäß durch eine Transportvorrichtung mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, den Zwischenboden so faltbar auszugestalten, dass er im gefalteten Zustand in den durch die Bodenplatte und die Seitenwände des Bodenteils gebildeten Behälter eingelegt werden kann. Zu diesem Zweck weist der Zwischenboden zwei gelenkig miteinander verbundene Bodenteile auf, von denen jedes eine Partie der weiteren Aufstellfläche aufweist. Die Bodenteile sind gegeneinander um eine Schwenkachse verschwenkbar, bis die beiden Partien der weiteren Aufstellfläche vorzugsweise flächig aufeinander liegen. Jedes der Bodenteile weist einen rechteckigen oder quadratischen Umriss auf, wobei mindestens eine der Seiten kürzer ist als beide Seiten der ebenfalls rechteckigen oder quadratischen Aufstellfläche der Bodenplatte und dessen andere Seite kürzer ist als mindestens eine der Seiten der Aufstellfläche. Ein durch Verschwenken der beiden Bodenteile gefalteter Zwischenboden kann dann in jedem Fall zwischen den Seitenwänden auf der Aufstellfläche der Bodenplatte abgelegt werden, indem er gegenüber der Position, die er im Gebrauch auf den Gefachen aufliegend einnimmt, um 90° gedreht wird.

Um ein Verrutschen der zweiten Gefache auf dem Zwischenboden zu verhindern, ist vorteilhaft vorgesehen, dass der Zwischenboden eine Anzahl von rings um die weitere Aufstellfläche im Abstand zueinander angeordneten, von dieser nach oben vorstehenden Zähnen aufweist. Dabei wird bevorzugt, dass jedem Zahn, der sich in einem Abstand zur Schwenkachse befindet, der nicht größer ist als der Abstand der Schwenkachse zu einer dem den Zahn tragenden Bodenteil abgewandten und parallel zur Schwenkachse verlaufenden Seite des jeweils anderen Bodenteils eine Ausnehmung am anderen Bodenteil zugeordnet ist, die so dimensioniert und angeordnet ist, dass beim Anlegen der Partien der weiteren Aufstellfläche aneinander der betreffende Zahn in die betreffende Ausnehmung eintaucht. Mit anderen Worten ist jedem Zahn, der beim Verschwenken der beiden Bodenteile gegeneinander auf dem jeweils anderen Bodenteil zu liegen käme, in diesem eine Ausnehmung zugeordnet, in die er eintauchen kann. Im Gegensatz zu einem nach oben abstehenden, umlaufenden Rand, der beim Verschwenken der Bodenteile gegeneinander hinderlich wäre und ein flächiges Anlegen der Partien der weiteren Aufstellfläche aneinander verhinderte, ermöglicht diese Ausgestaltung ein vollständiges Umklappen des einen Bodenteils bezüglich des anderen Bodenteils und ein flächiges Anlegen der beiden Partien der weiteren Aufstellfläche aneinander. Dabei wird bevorzugt, dass jeder Ausnehmung spiegelsymmetrisch zur Schwenkachse ein Zahn zugeordnet ist, der so groß wie die betreffende Ausnehmung oder kleiner ist, so dass dieser vollständig in sie eintauchen kann.

Es ist möglich, dass die Bodenteile mittels eines Filmscharniers einstückig miteinander verbunden sind, das nicht aus der weiteren Aufstellfläche vorsteht. Ein solches Filmscharnier verursacht dann keine Unebenheit der weiteren Aufstellfläche, die beim Aufstellen der Gefache mit den Unterkanten ihrer Umfangswände hinderlich wäre. Es wird jedoch bevorzugt, dass die beiden Bodenteile mittels mindestens eines Scharniers miteinander verbunden sind, das zwei starre Befestigungselemente aufweist, von denen jeweils eines fest mit dem einen Bodenteil und eines fest mit dem anderen Bodenteil verbunden ist, und die verschwenkbar miteinander verbunden sind. Solche Scharniere können sehr stabil ausgebildet sein. Sie werden zweckmäßig mit ihren Befestigungselementen an den Partien der weiteren Aufstellfläche fixiert. Sie können mittels ineinander greifender Scharnierteile miteinander verbunden werden. Es wird jedoch bevorzugt, dass sie mittels eines biegsamen Verbindungselements miteinander verbunden sind, das beispielsweise aus Gummi bestehen kann. Weitere bevorzugte Materialien sind Polyvinylchlorid (PVC) für die Befestigungselemente und Polypropylen (PP) für die Bodenteile. Da die Anbringung der Befestigungselemente an der weiteren Aufstellfläche Erhebungen der weiteren Aufstellfläche bedingt, die beim Aufstellen der zweiten Gefache hinderlich sein können, wird bevorzugt, dass sich das mindestens eine Scharnier nicht über die gesamte Breite des Zwischenbodens erstreckt. Insbesondere wird bevorzugt, dass die beiden Bodenteile mittels mindestens zweier vorzugsweise baugleicher und im Abstand zueinander angeordneter Scharniere miteinander verbunden sind. Auf diese Weise ist es möglich, dass zwischen jeweils zwei zueinander benachbarter Scharnieren die unteren Kanten zweier zu verschiedenen zweiten Gefachen gehörenden Umfangswänden angeordnet sind, die dann nicht auf den Befestigungselementen aufgestellt werden müssen, sondern sich an den durch diese bedingten Unebenheiten in der weiteren Aufstellfläche vorbei erstrecken. Desweiteren wird bevorzugt, dass die zweiten Gefache die Befestigungselemente nicht berühren, sondern mit den Unterkanten ihrer Umfangswände eben auf der weiteren Aufstellfläche aufstehen. Zweckmäßig ist ein auf den oberen Kanten der zweiten Gefache aufliegender und diese umgreifender Deckel vorgesehen, der die zweiten Gefache nach oben hin verschließt. Dabei wird bevorzugt, dass der Deckel einen die zweiten Gefache an ihren oberen Kanten umgreifenden Stapelrand aufweist und dass die Seitenwände an ihren einander zugewandten Innenseiten einen Absatz aufweisen, der so dimensioniert ist, dass der Stapelrand auf ihn zwischen die Seitenwände eintauchend aufgestellt werden kann. In der Rückholposition kann der Deckel dann den durch die Seitenwände und die Bodenplatte gebildeten Behälter bedecken, in den die gefalteten Gefache und der gefaltete Zwischenboden eingelegt sind.

Bei der Herstellung eines solchen Zwischenbodens werden vorteilhaft zwei vorzugsweise einstückig ausgebildete Grundplatten aus Kunststoff bereitgestellt, aus denen die Bodenteile hergestellt werden. Hierzu werden ent-lang in sich geschlossener erster Schnittlinien die Ausnehmungen aus den Grundplatten ausgeschnitten, und es werden entlang von einem Anfangspunkt bis zu einem Endpunkt verlaufender zweiter Schnittlinien Konturen für die Zähne ausgeschnitten. Dann werden die Grundplatten entlang der die Anfangspunkte mit den zugehörigen Eckpunkten verbindender Biegelinien erwärmt, und es werden die Zähne entlang der Biegelinien nach oben aus der Oberfläche herausgebogen. Desweiteren werden die Grundplatten entlang weiterer Biegelinien erwärmt, und es werden den Rand bildende Randpartien entlang der weiteren Biegelinien nach unten abgekantet. Schließlich werden die beiden solchermaßen hergestellten Bodenteile mittels mindestens eines die Schwenkachse bildenden Scharniers so miteinander verbunden, dass jedem Zahn spiegelsymmetrisch zur Schwenkachse eine Ausnehmung zugeordnet ist, die so groß wie der betreffende Zahn oder größer ist. Dabei wird bevorzugt, dass manche der Biegelinien mit mindestens einer der weiteren Biegelinien zusammenfallen und/oder in einer gemeinsamen Ebene liegen.

Im Folgenden wird die Erfindung anhand eines in der Zeichnung schematisch dargestellten Ausführungsbeispiels näher erläutert. Es zeigen
- Fig. 1a, 1: b eine Transportvorrichtung in einer Transportposition und in einer Rückholposition in perspektivischer Ansicht;
- Fig. 2a, 2b: einen Stapel mehrerer Transportvorrichtungen gemäß Fig. 1a, 1b in der Transportposition und in der Rückholposition in Seitenansicht;
- Fig. 3: einen Zwischenboden in perspektivischer Ansicht;
- Fig. 4a, 4b: zwei Grundplatten zur Herstellung des Zwischenbodens gemäß Fig.3 in Draufsicht;
- Fig. 5: ein Gefache in perspektivischer Ansicht und
- Fig. 6: eine Transportvorrichtung ohne Gefache in der Rückholposition im Schnitt.

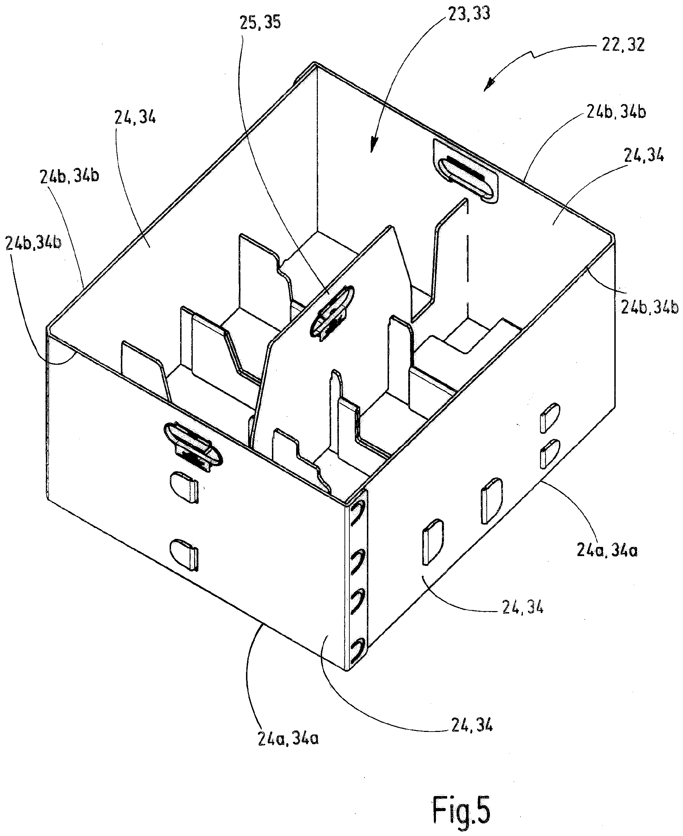

Die in der Zeichnung dargestellte Transportvorrichtung 10 weist ein als Palette ausgebildetes, nach unten abstehende Füße 12 aufweisendes Bodenteil 14 mit einer Bodenplatte 16 auf. Von der Bodenplatte 16 stehen Seitenwände 18 hoch, die rings um eine rechteckige Aufstellfläche 19 umlaufen und zusammen mit der Bodenplatte 16 einen nach oben offenen Behälter 20 bilden. In diesem sind im gezeigten Ausführungsbeispiel vier erste Gefache 22 angeordnet, die über die Oberkanten der Seitenwände 18 hinaus ragen. Die ersten Gefache 22 (Fig. 5) weisen jeweils vier Umfangswände 24 auf, die einen nach oben und unten offenen Aufnahmeraum 23 umranden. In jedem Aufnahmeraum 23 ist eine Aufnahmestruktur 25 für Stückgut, im gezeigten Ausführungsbeispiel für Kraftfahrzeugscheinwerfer, angeordnet. Die ersten Gefache 22 stehen mit unteren Kanten 24a ihrer Umfangswände 24 auf der Aufstellfläche auf. Sie sind zudem faltbar, so dass sie, wenn in ihnen kein Stückgut aufgenommen ist, platzsparend zusammengefaltet werden können.

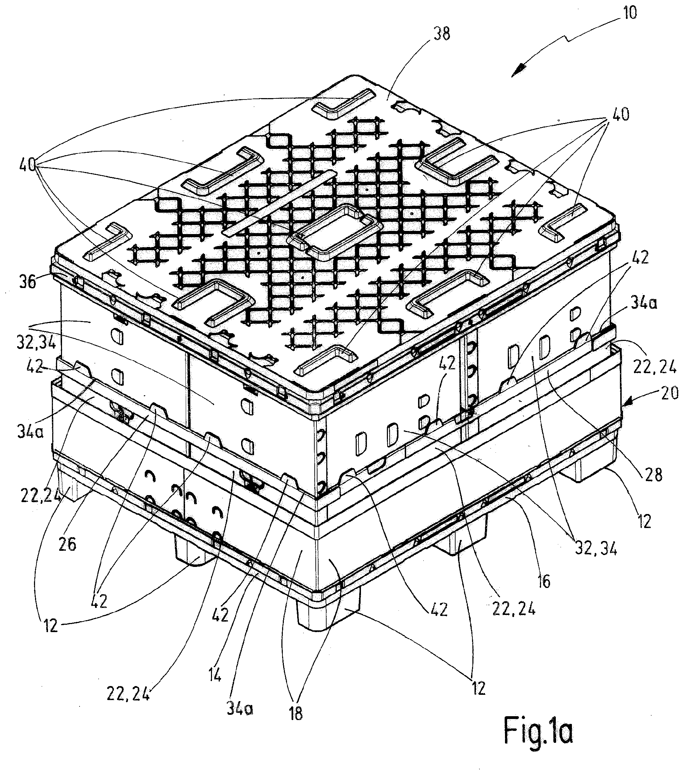

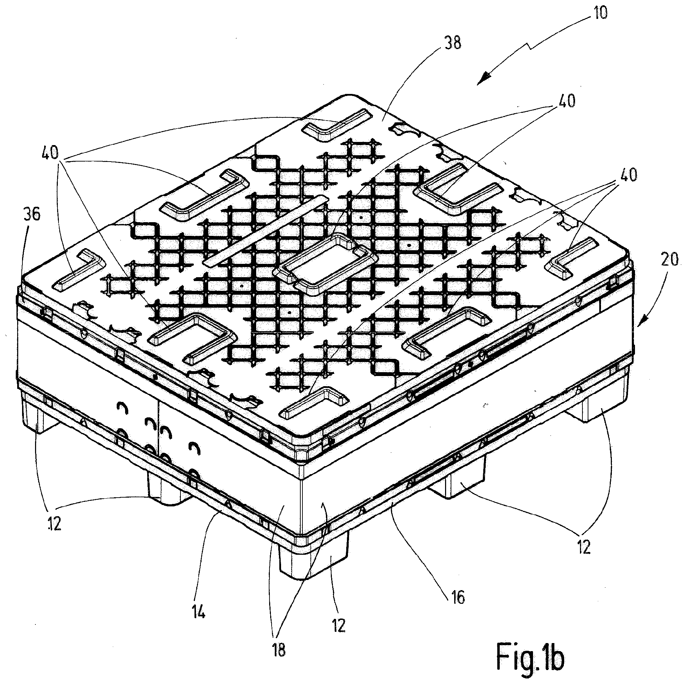

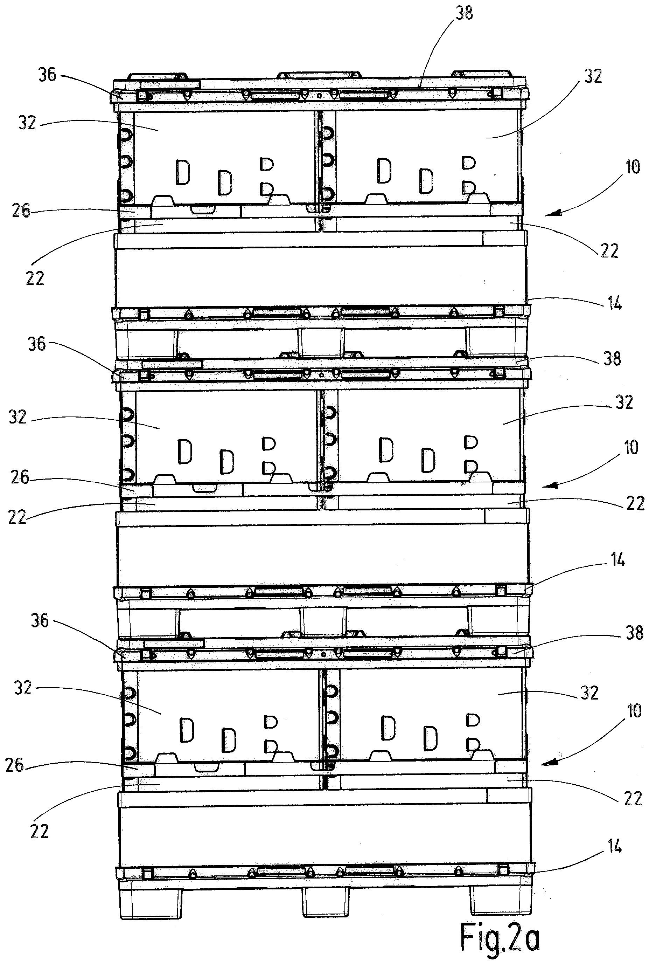

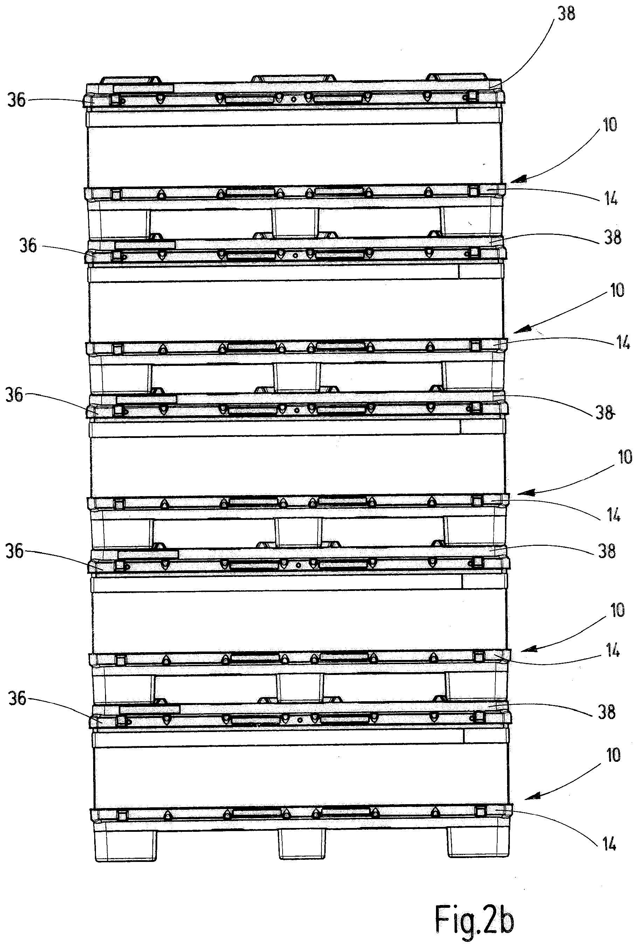

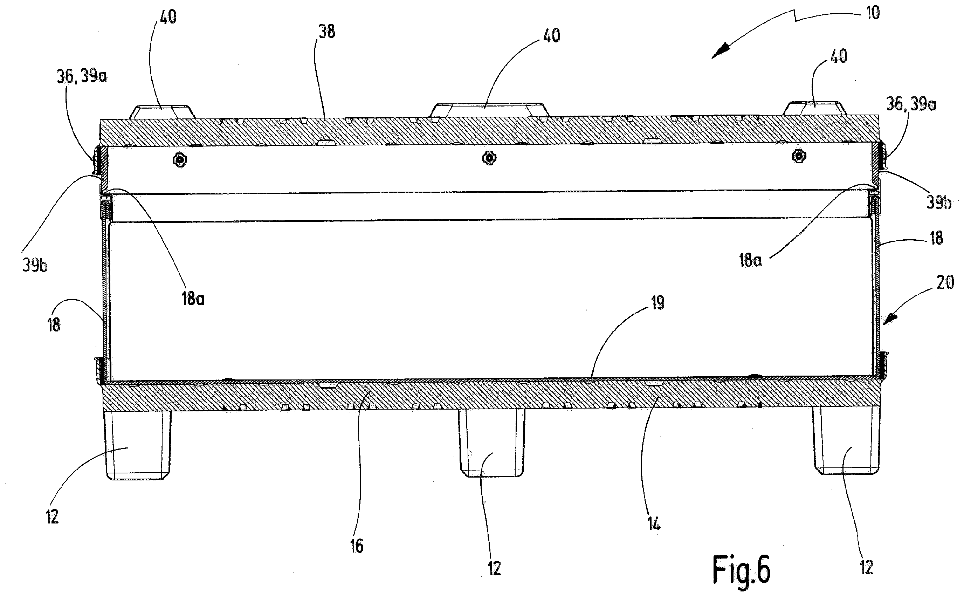

Auf den oberen Kanten 24b der Umfangswände 24 der ersten Gefache 22 liegt ein Zwischenboden 26 auf, der einen nach unten abstehenden, umlaufenden Rand 28 aufweist, der die ersten Gefache 22 an den oberen Kanten 24b ihrer Umfangswände 24 rings umgreift. Die Oberseite des Zwischenbodens 26 weist eine weitere Aufstellfläche 30 auf, auf der vier zweite Gefache 32 aufgestellt sind. Die zweiten Gefache 32 (Fig. 5) sind im gezeigten Ausführungsbeispiel baugleich mit den ersten Gefachen 22 ausgebildet und weisen einen durch vier Umfangswände 34 umrandeten Aufnahmeraum 33 für das Stückgut auf, in dem eine Aufnahmestruktur 35 für Kraftfahrzeugscheinwerfer angeordnet ist. Mit ihren unteren Kanten 34a stehen die Umfangswände 34 auf der weiteren Aufstellfläche 30 auf, während auf ihren oberen Kanten 34b ein Deckel 38 aufliegt, der sie nach oben hin verschließt. Der Deckel 38 weist einen nach unten abstehenden, umlaufenden Stapelrand 36 auf, der eine erste, einstückig angeformte Partie 39a und einen in die erste Partie 39a eingepassten Ring 39b aufweist. Dieser umgreift in der Transportposition die oberen Kanten 34b der zweiten Gefache 32 und liegt in der in Fig. 1b, 6 gezeigten Rückholposition auf einem Absatz 18a an den Seitenwänden 18 auf. Der Deckel 38 weist an seiner Oberseite Haltekonturen 40 auf, die komplementär zu den Füßen 12 sind, so dass, wie in Fig. 2a gezeigt, mehrere solcher Transportvorrichtungen 10 aufeinander gestapelt werden können, wobei die Haltekonturen 40 ein Verrutschen der Füße 12 auf dem jeweiligen Deckel 38 verhindern. Fig. 1a, 2a zeigen dabei eine Transportvorrichtung 10 bzw. einen Stapel dreier Transportvorrichtungen 10 in der Transportposition, in der die ersten und zweiten Gefache 22, 32 zur Aufnahme von Stückgut entfaltet und auf der Aufstellfläche bzw. auf der weiteren Aufstellfläche 30 mit den unteren Kanten 24a, 34a ihrer Umfangswände 24, 34 aufstehen. Fig. 1b, 2b zeigen die Transportvorrichtung 10 bzw. einen Stapel mit fünf Transportvorrichtungen 10, bei der bzw. bei denen die ersten und zweiten Gefache 22, 32 nach dem Entleeren zusammengefaltet und in den von den Seitenwänden 18 umschlossenen jeweiligen Behälter 20 eingelegt wurden. Der Deckel 38 der jeweiligen Transportvorrichtung 10 liegt dann auf dem Absatz 18a der Seitenwände 18 auf. Diese Position wird in der vorliegenden Anmeldung als Rückholposition bezeichnet.

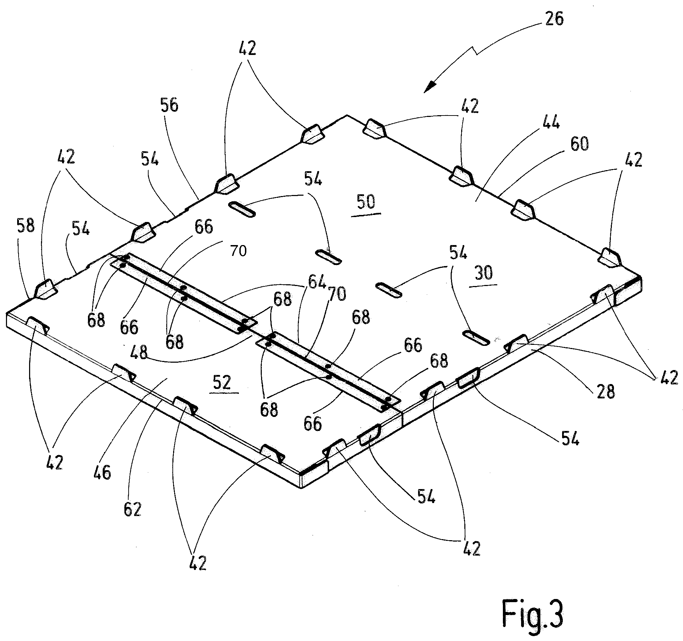

Der Zwischenboden 26 weist, wie in Fig. 3 im Detail dargestellt, mehrere nach oben abstehende, mit dem Rand 28 fluchtende und im Abstand zueinander angeordnete Zähne 42 auf, die die weitere Aufstellfläche 30 rings umranden und die weiteren Gefache 32 am Verrutschen auf der weiteren Aufstellfläche 30 hindern. Da die weitere Aufstellfläche 30 gleich groß ist wie die Aufstellfläche an der Bodenplatte 16, ist der Zwischenboden 26 in der in Fig. 3 dargestellten Position zu groß, um in der Rückholposition der Transportvorrichtung 10 zwischen die Seitenwände 18 eingelegt zu werden. Aus diesem Grund ist sie faltbar ausgebildet mit zwei unterschiedlich großen Bodenteilen 44, 46, die bezüglich einer Schwenkachse 48 gegeneinander verschwenkbar sind. Jedes der Bodenteile 44, 46 weist eine Partie 50, 52 der weiteren Aufstellfläche 30 auf. Die beiden Bodenteile 44, 46 sind bis zu einer flächigen Anlage der Flächenpartien 50, 52 gegeneinander verschwenkbar, indem der Zwischenboden 26 zu jedem der Zähne 42, der nicht ausreichend weit von der Schwenkachse 48 entfernt ist und beim Verschwenken der Bodenteile 44, 46 um die Schwenkachse 48 auf das jeweils andere Bodenteil 44, 46 treffen würde, eine Ausnehmung 54 aufweist, die mindestens so groß ist wie der betreffende Zahn 42 und die bezüglich der Schwenkachse 48 spiegelsymmetrisch zum betreffenden Zahn 42 angeordnet ist, so dass dieser beim Verschwenken der Bodenteile 44, 46 gegeneinander in die betreffende Ausnehmung 54 eintauchen kann. Teilweise befinden sich die Ausnehmungen 54 in der weiteren Aufstellfläche 30, teilweise befinden sie sich am Rand der weiteren Aufstellfläche 30 und erstrecken sich in den nach unten abstehenden Rand 28. Im gezeigten Ausführungsbeispiel sind alle Zähne 42 gleich groß und alle Ausnehmungen 54 sind ebenfalls gleich groß. Die beiden Bodenteile 44, 46 weisen jeweils einen rechteckigen Umriss auf. Dabei ist die kürzere Seite 56 des ersten Bodenteils 44 ebenso wie die kürzere Seite 58 des zweiten Bodenteils 46 kürzer als jede der beiden Seiten der ebenfalls rechteckigen Aufstellfläche. Die längere Seite 60 des ersten Bodenteils 44 ist, ebenso wie die längere Seite 62 des zweiten Bodenteils 46 kürzer als die längere Seite der Aufstellfläche. Somit ist es möglich, den Zwischenboden mit gegeneinander verschwenkten Bodenteilen 44, 46 nach einer 90°-Drehung um eine senkrecht verlaufende Achse zwischen die Seitenwände 18 einzulegen.

Die beiden Bodenteile 44, 46 sind im gezeigten Ausführungsbeispiel mittels zweier Scharniere 64 miteinander verbunden. Jedes der Scharniere 64 weist zwei leistenförmige Befestigungselemente 66 auf, die mittels Nieten 68 an den Bodenteilen 44, 46 befestigt sind. Dabei ist bei jedem der Scharniere 64 eines der Befestigungselemente 66 am ersten Bodenteil 44 und das andere Befestigungselement 66 am zweiten Bodenteil 46 befestigt. Zwischen den Befestigungselementen 66, die bevorzugt aus Polyvinylchlorid (PVC) gefertigt sind, ist ein die Befestigungselemente 66 verbindendes biegsames Verbindungselement 70 aus Gummi angeordnet. Die beiden Scharniere 64 sind so im Abstand zueinander und im Abstand zur Außenkontur des Zwischenbodens 26 angeordnet, dass die unteren Kanten 34a der Umfangswände 34 der zweiten Gefache 32 an ihnen vorbei verlaufen und direkt auf der weiteren Aufstellfläche 30 aufstehen. Die zweiten Gefache 32 berühren die Scharniere 64 nicht.

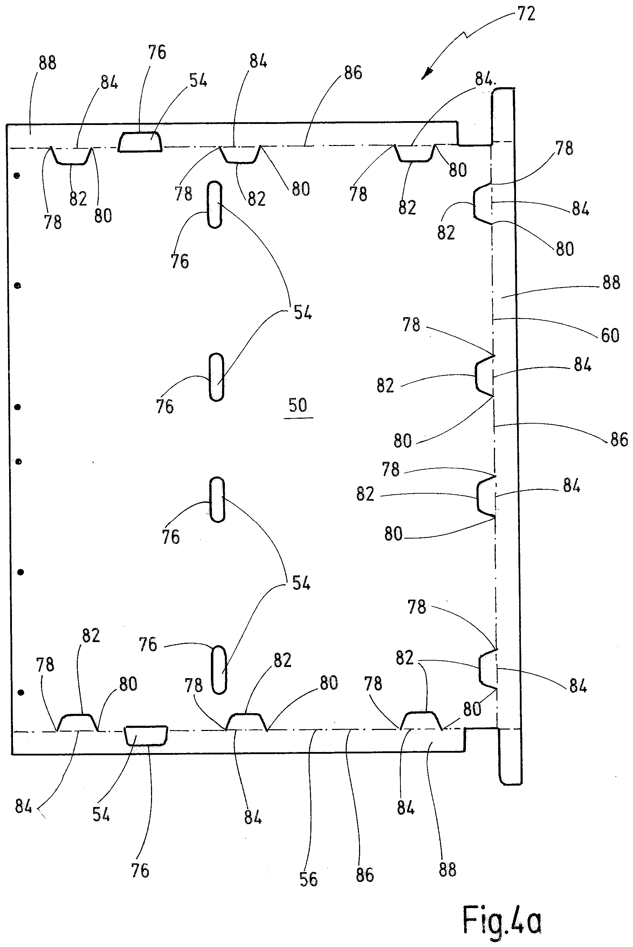

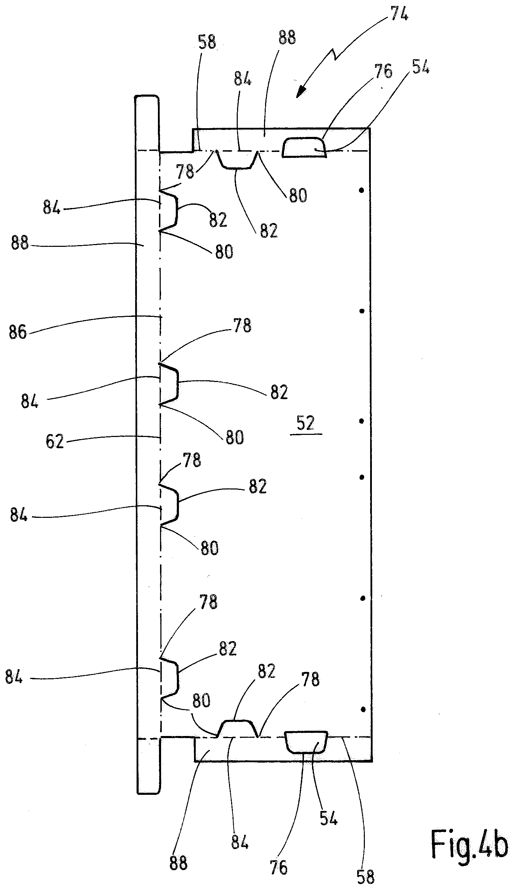

Der Zwischenboden 26 wird gemäß dem gezeigten Ausführungsbeispiel aus zwei in Fig. 4a, 4b gezeigten Grundplatten 72, 74 hergestellt, die jeweils einstückig aus Polypropylen (PP) hergestellt sind. Aus jeder der Grundplatten 72, 74 werden entlang in sich geschlossener erster Schnittlinien 76 die Ausnehmungen 54 ausgeschnitten. Desweiteren werden entlang von einem Anfangspunkt 78 bis zu einem Endpunkt 80 verlaufender zweiter Schnittlinien 82 Konturen für die Zähne 42 ausgeschnitten. Die Zähne 42 werden aus der jeweiligen Oberflächenpartie 50, 52 der Grundplatten 72, 74 herausgebogen, indem die Grundplatten 72, 74 entlang von Biegelinien 84 erwärmt werden, die sich jeweils von einem der Anfangspunkte 78 zum zugehörigen Endpunkt 80 erstecken. Desweiteren werden den Rand 28 bildende Randpartien 88 um weitere Biegelinien 86 nach unten abgebogen. Zu diesem Zweck wird die jeweilige Grundplatte 72, 74 entlang der weiteren Biegelinien erwärmt. Im gezeigten Ausführungsbeispiel fallen die Biegelinien 84 und die weiteren Biegelinien 86 zusammen bzw. verlaufen in einer Gerade.

Zusammenfassend ist folgendes festzuhalten: Die Erfindung betrifft eine Transportvorrichtung 10 für Stückgut mit einem Bodenteil 14, das eine Bodenplatte 16 und von der Bodenplatte 16 hochstehende, zumindest abschnittsweise rings umlaufende Seitenwände 18 aufweist, wobei die Seitenwände 18 eine rechteckige oder quadratische Aufstellfläche der Bodenplatte 16 begrenzen, mit einer Anzahl erster Gefache 22 zur Aufnahme von Stückgut, wobei jedes der ersten Gefache 22 jeweils mit einer unteren Kante auf der Aufstellfläche aufstehende, einen Aufnahmeraum umrandende Umfangswände 24 aufweist, mit einem auf den ersten Gefachen 22 aufliegenden Zwischenboden 26, der einen nach unten abstehenden, zumindest abschnittsweise umlaufenden und die ersten Gefache 22 an oberen Kanten 24b ihrer Umfangswände 24 umgreifenden Rand 28 und eine nach oben weisende weitere Aufstellfläche 30 aufweist, mit einer Anzahl zweiter Gefache 32, wobei jedes der zweiten Gefache 32 jeweils mit einer unteren Kante 34a auf der weiteren Aufstellfläche 30 aufstehende, einen Aufnahmeraum umrandende Umfangswände 34 aufweist, und wobei die ersten und zweiten Gefache 22, 32 zum Zwecke der Volumenreduktion faltbar sind. Erfindungsgemäß ist vorgesehen, dass der Zwischenboden 26 zwei gelenkig miteinander verbundene, jeweils eine Partie 50, 52 der weiteren Aufstellfläche 30 aufweisende und bis zu einer Anlage der Partien 50, 52 der weiteren Aufstellfläche 30 aneinander um eine Schwenkachse 48 gegeneinander verschwenkbare Bodenteile 44, 46 aufweist, wobei jedes der Bodenteile 44, 46 einen rechteckigen oder quadratischen Umriss aufweist, dessen eine Seite 56, 58 kürzer ist als beide Seiten der Aufstellfläche und dessen andere Seite 60, 62 kürzer ist als mindestens eine der Seiten der Aufstellfläche.

## Patentansprüche

1. Transportvorrichtung für Stückgut mit einem Bodenteil (14), das eine Bodenplatte (16) und von der Bodenplatte (16) hochstehende, zumindest abschnittsweise rings umlaufende Seitenwände (18) aufweist, wobei die Seitenwände (18) eine rechteckige oder quadratische Aufstellfläche der Bodenplatte (16) begrenzen, mit einer Anzahl erster Gefache (22) zur Aufnahme von Stückgut, wobei jedes der ersten Gefache (22) jeweils mit einer unteren Kante auf der Aufstellfläche aufstehende, einen Aufnahmeraum umrandende Umfangswände (24) aufweist, mit einem auf den ersten Gefachen (22) aufliegenden Zwischenboden (26), der einen nach unten abstehenden, zumindest abschnittsweise umlaufenden und die ersten Gefache (22) an oberen Kanten (24b) ihrer Umfangswände (24) umgreifenden Rand (28) und eine nach oben weisende weitere Aufstellfläche (30) aufweist, mit einer Anzahl zweiter Gefache (32), wobei jedes der zweiten Gefache (32) jeweils mit einer unteren Kante (34a) auf der weiteren Aufstellfläche (30) aufstehende, einen Aufnahmeraum umrandende Umfangswände (34) aufweist, und wobei die ersten und zweiten Gefache (22, 32) zum Zwecke der Volumenreduktion faltbar sind, **dadurch gekennzeichnet, dass** der Zwischenboden (26) zwei gelenkig miteinander verbundene, jeweils eine Partie (50, 52) der weiteren Aufstellfläche (30) aufweisende und bis zu einer Anlage der Partien (50, 52) der weiteren Aufstellfläche (30) aneinander um eine Schwenkachse (48) gegeneinander verschwenkbare Bodenteile (44, 46) aufweist, wobei jedes der Bodenteile (44, 46) einen rechteckigen oder quadratischen Umriss aufweist, dessen eine Seite (56, 58) kürzer ist als beide Seiten der Aufstellfläche und dessen andere Seite (60, 62) kürzer ist als mindestens eine der Seiten der Aufstellfläche.

2. Transportvorrichtung nach Anspruch 1, **dadurch gekennzeichnet, dass** der Zwischenboden (26) eine Anzahl von rings um die weitere Aufstellfläche (30) im Abstand zueinander angeordneten, von dieser nach oben vorstehenden Zähnen (42) aufweist.

3. Transportvorrichtung nach Anspruch 2, **dadurch gekennzeichnet, dass** jedem Zahn (42), der sich in einem Abstand zur Schwenkachse (48) befindet, der nicht größer ist als der Abstand der Schwenkachse (48) zu einer dem den Zahn (42) tragenden Bodenteil (44, 46) abgewandten und parallel zur Schwenkachse (48) verlaufenden Seite (60, 62) des jeweils anderen Bodenteils (44, 46) eine Ausnehmung (54) am anderen Bodenteil (44, 46) zugeordnet ist, die so dimensioniert und angeordnet ist, dass beim Anlegen der Partien (50, 52) der weiteren Aufstellfläche (30) aneinander der betreffende Zahn (42) in die betreffende Ausnehmung (54) eintaucht.

4. Transportvorrichtung nach Anspruch 3, **dadurch gekennzeichnet, dass** jeder Ausnehmung (54) spiegelsymmetrisch zur Schwenkachse (48) ein Zahn (42) zugeordnet ist, der so groß wie die betreffende Ausnehmung (54) oder kleiner ist.

5. Transportvorrichtung nach einem der vorangehenden Ansprüche, **dadurch gekennzeichnet, dass** die Bodenteile (44, 46) mittels eines Filmscharniers einstückig miteinander verbunden sind, das nicht aus der weiteren Aufstellfläche (30) vorsteht.

6. Transportvorrichtung nach einem der Ansprüche 1 bis 4, **dadurch gekennzeichnet, dass** die beiden Bodenteile (44, 46) mittels mindestens eines Scharniers (64) miteinander verbunden sind, das zwei starre Befestigungselemente (66) aufweist, von denen jeweils eines fest mit dem einen Bodenteil (44) und eines fest mit dem anderen Bodenteil (46) verbunden ist, und die verschwenkbar miteinander verbunden sind.

7. Transportvorrichtung nach Anspruch 6, **dadurch gekennzeichnet, dass** die Befestigungselemente (66) mittels eines biegsamen Verbindungselements (70) miteinander verbunden sind, das vorzugsweise aus Gummi besteht.

8. Transportvorrichtung nach Anspruch 6 oder 7, **dadurch gekennzeichnet, dass** die beiden Bodenteile (44, 46) mittels mindestens zweier vorzugsweise baugleicher und im Abstand zueinander angeordneter Scharniere (64) miteinander verbunden sind.

9. Transportvorrichtung nach Anspruch 8, **dadurch gekennzeichnet, dass** zwischen jeweils zwei zueinander benachbarten Scharnieren (64) die unteren Kanten (34a) zweier zu verschiedenen zweiten Gefachen (32) gehörender Umfangswände (34) angeordnet sind.

10. Transportvorrichtung nach einem der Ansprüche 6 bis 9, **dadurch gekennzeichnet, dass** die zweiten Gefache (32) die Befestigungselemente (66) nicht berühren.

11. Transportvorrichtung nach einem der vorangehenden Ansprüche, **gekennzeichnet durch** einen auf den oberen Kanten (34b) der zweiten Gefache (32) aufliegenden und diese umgreifenden Deckel (38).

12. Transportvorrichtung nach Anspruch 11, **dadurch gekennzeichnet, dass** der Deckel (38) einen die zweiten Gefache (32) an ihren oberen Kanten (34b) umgreifenden Stapelrand (36) aufweist und dass die Seitenwände (18) an ihren einander zugewandten Innenseiten einen Absatz (18a) aufweisen, der so dimensioniert ist, dass der Stapelrand (36) auf ihn zwischen die Seitenwände (18) eintauchend aufgestellt werden kann.

## Claims

1. A transport device for piece goods, comprising: a base part (14) which has a base plate (16) and side walls (18) which project up from the base plate (16) and run around at least in certain portions, wherein the side walls (18) delimit a rectangular or square placement surface of the base plate (16); a number of first compartments (22) for receiving piece goods, wherein each of the first compartments (22) has circumferential walls (24) which each stand by way of a lower edge on the placement surface and which enclose a receiving space; an intermediate base (26) which lies on the first compartments (22) and which has a downwardly protruding edge (28), which runs around at least in certain portions and engages around the first compartments (22) at upper edges (24b) of their circumferential walls (24), and an upwardly pointing further placement surface (30); a number of second compartments (32), wherein each of the second compartments (32) has circumferential walls (34) which each stand by way of a lower edge (34a) on the further placement surface (30) and which enclose a receiving space, and wherein the first and second compartments (22, 32) are foldable for the purpose of volume reduction, **characterized in that** the intermediate base (26) has two articulatedly interconnected base parts (44, 46) which each have a portion (50, 52) of the further placement surface (30) and can be pivoted relative to one another about a pivot axis (48) until the portions (50, 52) of the further placement surface (30) bear against one another, wherein each of the base parts (44, 46) has a rectangular or square outline whose one side (56, 58) is shorter than both sides of the placement surface and whose other side (60, 62) is shorter than at least one of the sides of the placement surface.

2. The transport device as claimed in claim 1, **characterized in that** the intermediate base (26) has a number of teeth (42) which are arranged at a distance from one another around the further placement surface (30) and protrude upwardly therefrom.

3. The transport device as claimed in claim 2, **characterized in that** each tooth (42) which is situated at a distance from the pivot axis (48) that is not larger than the distance of the pivot axis (48) from a side (60, 62) of the respective other base part (44, 46) that faces away from the base part (44, 46) bearing the tooth (42) and that extends parallel to the pivot axis (48) is assigned a cutout (54) on the other base part (44, 46) that is dimensioned and arranged in such a way that, upon bearing of the portions (50, 52) of the further placement surface (30) against one another, the relevant tooth (42) engages in the relevant cutout (54).

4. The transport device as claimed in claim 3, **characterized in that** each cutout (54) is assigned, with mirror symmetry to the pivot axis (48), a tooth (42) which is as large as the relevant cutout (54) or smaller.

5. The transport device as claimed in one of the preceding claims, **characterized in that** the base parts (44, 46) are connected to one another in one piece by means of a film hinge which does not protrude from the further placement surface (30).

6. The transport device as claimed in one of claims 1 to 4, **characterized in that** the two base parts (44, 46) are connected to one another by means of at least one hinge (64) which has two rigid fastening elements (66), of which in each case one is fixedly connected to the one base part (44) and one is fixedly connected to the other base part (46), and which are pivotably connected to one another.

7. The transport device as claimed in claim 6, **characterized in that** the fastening elements (66) are connected to one another by means of a flexible connecting element (70) which preferably consists of rubber.

8. The transport device as claimed in claim 6 or 7, **characterized in that** the two base parts (44, 46) are connected to one another by means of at least two hinges (64) which are preferably structurally identical and arranged at a distance from one another.

9. The transport device as claimed in claim 8, **characterized in that** the lower edges (34a) of two circumferential walls (34) belonging to different second compartments (32) are arranged between in each case two mutually adjacent hinges (64).

10. The transport device as claimed in one of claims 6 to 9, **characterized in that** the second compartments (32) do not contact the fastening elements (66).

11. The transport device as claimed in one of the preceding claims, **characterized by** a cover (38) which lies on and engages around the upper edges (34b) of the second compartments (32).

12. The transport device as claimed in claim 11, **characterized in that** the cover (38) has a stacking edge (36) which engages around the second compartments (32) at their upper edges (34b), and **in that** the side walls (18) have at their mutually facing inner sides a shoulder (18a) which is dimensioned in such a way that the stacking edge (36) can be placed thereon so as to engage between the side walls (18).

## Revendications

1. Dispositif de transport pour marchandises de détail, comprenant une partie de fond (14) munie d'une plaque de fond (16) et de parois latérales (18) qui se dressent verticalement à partir de ladite plaque de fond (16) et longent le pourtour, au moins par zones, lesquelles parois latérales (18) délimitent une surface d'appui rectangulaire ou carrée de ladite plaque de fond (16) ; un certain nombre de premiers casiers (22) conçus pour recevoir des marchandises de détail, chacun desdits premiers casiers (22) étant pourvu, à chaque fois, de parois périphériques (24) qui se dressent verticalement sur ladite surface d'appui, par une arête inférieure, et encadrent un espace de réception ; un fond intermédiaire (26) reposant sur lesdits premiers casiers (22) et présentant un bord (28) qui fait saillie vers le bas, s'étend au moins par zones dans le sens périphérique et ceinture lesdits premiers casiers (22) au niveau d'arêtes supérieures (24b) de leurs parois périphériques (24), ainsi qu'une surface d'appui supplémentaire (30) qui pointe vers le haut ; et un certain nombre de seconds casiers (32), sachant que chacun desdits seconds casiers (32) est doté, à chaque fois, de parois périphériques (34) qui se dressent verticalement sur ladite surface d'appui supplémentaire (30), par une arête inférieure (34a), et encadrent un espace de réception, et sachant que les premiers et seconds casiers (22, 32) peuvent être repliés en vue de réduire le volume, **caractérisé par le fait que** le fond intermédiaire (26) comporte deux parties inférieures (44, 46) qui sont reliées l'une à l'autre de manière articulée, sont respectivement munies d'une région (50, 52) de la surface d'appui supplémentaire (30) et peuvent pivoter l'une par rapport à l'autre, autour d'un axe de pivotement (48), jusqu'à ce que les régions (50, 52) de ladite surface d'appui supplémentaire (30) viennent mutuellement en applique, chacune desdites parties inférieures (44, 46) présentant un profil rectangulaire ou carré dont l'un (56, 58) des côtés et plus court que les deux côtés de la surface d'appui, et dont l'autre côté (60, 62) est plus court qu'un moins l'un des côtés de ladite surface d'appui.

2. Dispositif de transport selon la revendication 1, **caractérisé par le fait que** le fond intermédiaire (26) comporte un certain nombre de dents (42) agencées à distance les unes des autres en longeant le pourtour de la surface d'appui supplémentaire (30) et faisant saillie, vers le haut, au-delà de cette dernière.

3. Dispositif de transport selon la revendication 2, **caractérisé par le fait qu'**un évidement (54) est associé à chaque dent (42) espacée, de l'axe de pivotement (48), d'une distance n'excédant pas la distance comprise entre ledit axe de pivotement (48) et un côté (60, 62) de la partie inférieure (44, 46) respectivement autre, qui est tourné à l'opposé de la partie inférieure (44, 46) portant ladite dent (42) et s'étend parallèlement audit axe de pivotement (48), lequel évidement est pratiqué dans ladite autre partie inférieure (44, 46), et est dimensionné et disposé de façon telle que la dent (42) concernée pénètre dans l'évidement (54) concerné lorsque les régions (50, 52) de la surface d'appui supplémentaire (30) sont mises mutuellement en applique.

4. Dispositif de transport selon la revendication 3, **caractérisé par le fait qu'**une dent (42), associée à chaque évidement (54) avec symétrie spéculaire par rapport à l'axe de pivotement (48), présente un dimensionnement égal ou inférieur à celui de l'évidement (54) concerné.

5. Dispositif de transport selon l'une des revendications précédentes, **caractérisé par le fait que** les parties inférieures (44, 46) sont reliées l'une à l'autre, d'un seul tenant, au moyen d'une charnière pelliculaire ne faisant pas saillie au-delà de la surface d'appui supplémentaire (30).

6. Dispositif de transport selon l'une des revendications 1 à 4, **caractérisé par le fait que** les deux parties inférieures (44, 46) sont reliées l'une à l'autre à l'aide d'au moins une charnière (64) dotée de deux éléments rigides de fixation (66) dont l'un respectif est relié fermement à l'une (44) des parties inférieures, et un autre est relié fermement à l'autre partie inférieure (46), lesquels éléments sont reliés l'un à l'autre avec faculté de pivotement.

7. Dispositif de transport selon la revendication 6, **caractérisé par le fait que** les éléments de fixation (66) sont reliés mutuellement au moyen d'un élément flexible de liaison (70) consistant, de préférence, en du caoutchouc.

8. Dispositif de transport selon la revendication 6 ou 7, **caractérisé par le fait que** les deux parties inférieures (44, 46) sont reliées l'une à l'autre à l'aide d'au moins deux charnières (64) préférentiellement de type identique, implantées à distance l'une de l'autre.

9. Dispositif de transport selon la revendication 8, **caractérisé par le fait que** les arêtes inférieures (34a) de deux parois périphériques (34) faisant partie intégrante de seconds casiers (32) différents sont interposées, à chaque fois, entre deux charnières (64) voisines l'une de l'autre.

10. Dispositif de transport selon l'une des revendications 6 à 9, **caractérisé par le fait que** les seconds casiers (32) ne sont pas en contact avec les éléments de fixation (66).

11. Dispositif de transport selon l'une des revendications précédentes, **caractérisé par** un couvercle (38) reposant sur les arêtes supérieures (34b) des seconds casiers (32), et ceinturant ces derniers.

12. Dispositif de transport selon la revendication 11, **caractérisé par le fait que** le couvercle (38) est muni d'un rebord d'empilement (36) qui ceinture les seconds casiers (32) au niveau de leurs arêtes supérieures (34b) ; et **par le fait que** les parois latérales (18) sont pourvues, sur leurs faces intérieures situées en vis-à-vis mutuel, d'un décrochement (18a) dimensionné de telle sorte que ledit rebord d'empilement (36) puisse y être mis en place en s'insinuant entre lesdites parois latérales (18).
